(19) **Europäisches Patentamt / European Patent Office / Office européen des brevets**

(11) **EP 4 563 274 A1**

(12) **EUROPEAN PATENT APPLICATION**
published in accordance with Art. 153(4) EPC

(43) Date of publication:
**04.06.2025 Bulletin 2025/23**

(21) Application number: **23868132.4**

(22) Date of filing: **14.09.2023**

(51) International Patent Classification (IPC):
**B23K 11/16** (2006.01)      **B23K 11/11** (2006.01)
**C22C 38/00** (2006.01)

(52) Cooperative Patent Classification (CPC):
**B23K 11/11; B23K 11/16; C22C 38/00**

(86) International application number:
**PCT/JP2023/033592**

(87) International publication number:
**WO 2024/063011 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.09.2022 JP 2022150137**

(71) Applicant: **JFE Steel Corporation**
**Tokyo 100-0011 (JP)**

(72) Inventors:
• **SAWANISHI, Chikaumi**
  **Tokyo 100-0011 (JP)**

• **KANAZAWA, Tomomi**
  **Tokyo 100-0011 (JP)**
• **TAKASHIMA, Katsutoshi**
  **Tokyo 100-0011 (JP)**
• **MATSUDA, Hiroshi**
  **Tokyo 100-0011 (JP)**
• **YAMAMOTO, Shunsuke**
  **Tokyo 100-0011 (JP)**
• **HOSHINO, Katsuya**
  **Tokyo 100-0011 (JP)**
• **KAWANO, Takashi**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **WELDED MEMBER AND MANUFACTURING METHOD THEREFOR**

(57)     It is an object to provide a welded member and a method for producing the welded member. In the welded member of the invention, the total thickness of a sheet set and the minimum thickness of a resistance spot weld satisfy formula (1). At least one steel sheet in the sheet set is a steel sheet having an internally oxidized layer in a steel sheet surface layer. In a base metal zone in the steel sheet having the internally oxidized layer, the amount of oxygen per unit area in the internally oxidized layer satisfies formula (2). In a weld heat affected zone in this steel sheet, the density of Si-containing oxide in a first region satisfies formula (3), and the average Si concen-trations in second and third regions satisfy formula (4).

$$0.5 < t_{weld} / t_{all} < 1.0 \qquad (1)$$

$$0.02 < Os < 1.0 \qquad (2)$$

$$0.01 \leq Ns \qquad (3)$$

$$Ss / St < 1.0 \qquad (4)$$

EP 4 563 274 A1

# FIG. 2

**Description**

Technical Field

The present invention relates to a welded member produced by resistance-spot-welding steel sheets and more particularly to a welded member suitable for members of structural parts of automobiles etc. and a method for producing the welded member.

Background Art

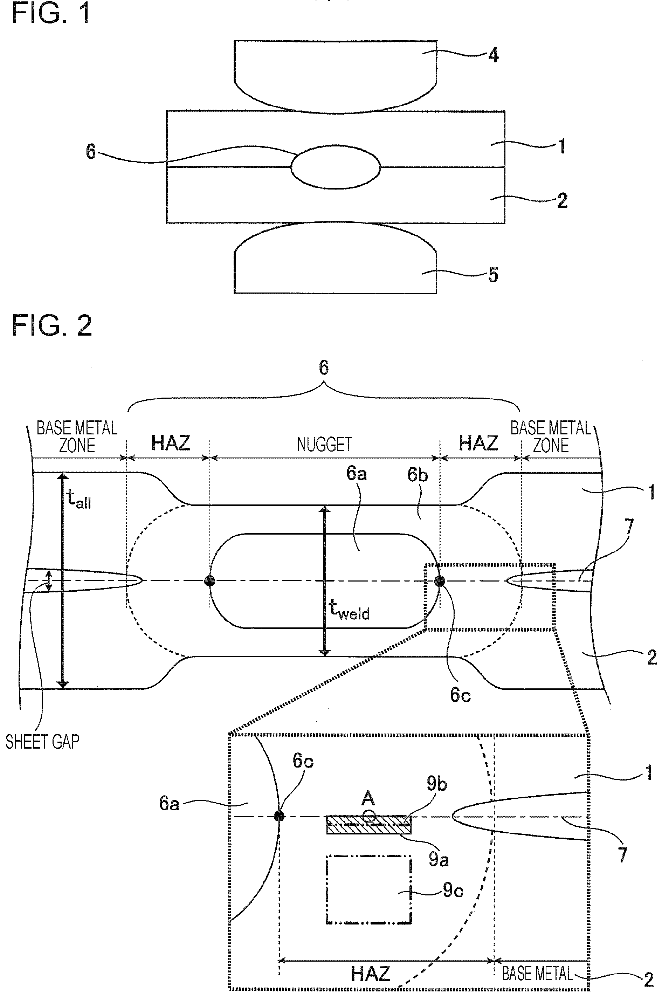

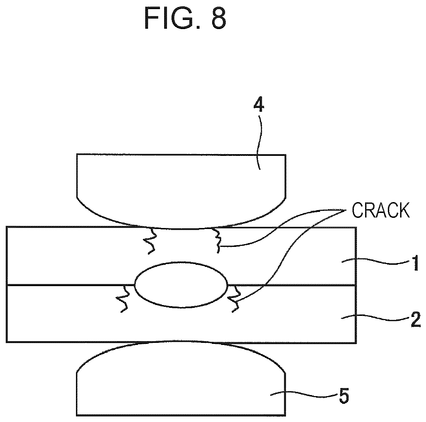

In recent years, increasing environmental concerns have led to stringent $CO_2$ emission regulations. One challenge in the field of automobiles is to reduce the weight of vehicle bodies for the purpose of improving fuel economy. Therefore, automotive parts are being reduced in thickness by using high strength steel sheets, and steel sheets having a tensile strength (TS) of 980 MPa or more are being increasingly used. From the viewpoint of corrosion resistance, steel sheets with coatings such as zinc having a rustproofing function are used for portions to be exposed to rainwater.
In automotive assembly, press-formed automotive parts are often combined together by resistance spot welding, from the viewpoint of cost and production efficiency. To join overlapping steel sheets together, a resistance spot welding method, which is one type of lap resistance welding, is generally used. In this welding method, two or more overlapping steel sheets are held between a vertical pair of welding electrodes, and a high welding current is applied between the upper and lower electrodes for a short time while the steel sheets are pressed between the upper and lower welding electrodes to thereby join the steel sheets together. Fig. 1 shows an example in which two overlapping steel sheets 1 and 2 held between welding electrodes 4 and 5 are resistance-spot-welded. In this method, resistance heat generated by the application of a high welding current is used to obtain a spot-shaped weld 6. The spot-shaped weld 6 is called a nugget. Specifically, when the current is applied to the overlapping steel sheets, the steel sheets 1 and 2 are melted at their contact portion and then solidified to form the nugget. The steel sheets are thereby jointed together at the spot.
To ensure crash safety, it is necessary to improve the strength of the steel sheets and to improve the strength of the weld. Various test methods have been used to evaluate the strength of the resistance spot weld, and one general evaluation method is a tensile shear test specified in JIS Z 3136. In this test method, a tensile load is applied to a welded joint in a tensile shear direction to measure the tensile shear strength (hereinafter referred to as TSS).
One problem with resistance spot welding of a sheet set including a plurality of overlapping steel sheets including a surface-treated steel sheet is that cracking can occur in the weld, as shown in Fig. 8. The surface-treated steel sheet is a steel sheet having a metal coated layer on the surface of a base metal (base steel sheet). Examples of the metal coating include: zinc coatings typified by electrogalvanized coatings and hot-dip galvanized coatings (including hot-dip galvannealed coatings); and zinc alloy coatings containing, in addition to zinc, another element such as aluminum or magnesium. The melting points of the zinc coatings and the zinc alloy coatings are lower than the melting point of the base metal of the surface-treated steel sheet, and therefore the following problem occurs.
It has been considered that the cracking in the weld is caused by so-called liquid metal embrittlement (hereinafter referred to as "LME cracking"). Specifically, the low-melting point metal coated layer on the surface of the steel sheet melts during welding. When the welding pressure from the electrodes or tensile stress due to thermal expansion and contraction of the steel sheets is applied to the weld, the molten low-melting point metal penetrates into grain boundaries of the base metal of the surface-treated steel sheet and causes a reduction in grain boundary strength, and the cracking thereby occurs. The LME cracking occurs at various positions such as the surfaces of the steel sheets 1 and 2 that are in contact with the welding electrodes 4 and 5 and the surfaces of the steel sheets 1 and 2 at which the steel sheets are in contact with each other, as shown in Fig. 8.
Examples of the measures against the LME cracking include techniques in Patent Literature 1 to Patent Literature 3. In Patent Literature 1, a steel sheet in a sheet set has a chemical composition in a specific range. Specifically, the steel sheet proposed has a chemical composition including, in % by weight, C: 0.003 to 0.01%, Mn: 0.05 to 0.5%, P: 0.02% or less, sol. Al: 0.1% or less, Ti: $48 \times (N / 14)$ to $48 \times \{(N / 14) + (S / 32)\}$%, Nb: $93 \times (C / 12)$ to 0.1%, B: 0.0005 to 0.003%, N: 0.01% or less, and Ni: 0.05% or less, with the balance being Fe and incidental impurities.
Patent Literature 2 proposes a spot welding method for high strength coated steel sheets. In this resistance spot welding method for high strength coated steel sheets, resistance spot welding is performed while the welding energization time and the holding time after welding energization are set such that the following conditional expressions (A) and (B) are satisfied.

$$0.25 \times (10 \times t + 2) / 50 \leq WT \leq 0.50 \times (10 \times t + 2) / 50 \text{ (A)} \qquad\qquad \text{(A)}$$

$$300 - 500 \times t + 250 \times t^2 \leq HT \qquad (2)$$

In the conditional expressions (A) and (B), t is the thickness (mm) of the sheets, WT is the welding energization time (ms), and HT is the holding time (ms) after welding energization.

Patent Literature 2 also proposes that the welding is performed using high tensile galvanized steel sheets with the amounts of alloying elements in the steel sheets set to be equal to or less than specific values while the energization time and the holding time of the electrodes after energization are set according to the thickness of the steel sheets.

Patent Literature 3 proposes a method that uses an energization pattern including multi-stage energization having three or more stages. Specifically, welding conditions such as energization time and welding current are controlled such that an appropriate current range ($\Delta I$) is 1.0 kA or more and preferably 2.0 kA or more, and a cooling period is provided between the stages. The above appropriate current range is a current range in which a nugget having a diameter equal to or more than a desired nugget diameter and an unmelted thickness of 0.05 mm or more can be stably formed.

Citation List

Patent Literature

PTL 1: Japanese Unexamined Patent Application Publication No. 10-195597
Patent Literature 2: Japanese Unexamined Patent Application Publication No. 2003-103377
Patent Literature 3: Japanese Unexamined Patent Application Publication No. 2003-236676

Summary of Invention

Technical Problem

However, one problem with Patent Literature 1 is that the need to limit the amounts of the alloying elements in the steel sheets limits the application of the steel sheets that meet the required performance. In particular, since the degree of alloying in recent steel sheets having increased strength is increasing, the applications of the steel sheets in Patent Literature 1 are extremely limited.

Patent Literature 2 proposes only the method for preventing cracking when the welding current is set to an excessively large value that causes splashes, and no reference is made to cracking in a state in which no splashes occur.

Problems with Patent Literature 3 are that many man-hours are required to obtain appropriate welding conditions and that the method cannot be applied to steel sheets and sheet sets in which the appropriate current range is not easily maintained. Moreover, in Patent Literature 2 and Patent Literature 3, the influence of the inclination angle of the electrodes is not studied, and therefore the measures against this influence are insufficient in some cases, in consideration of the actual operation performed during the assembly of automobiles.

By summarizing the common problem with Patent Literature 1 to Patent Literature 3 with consideration given to the joint strength, a technique for preventing the occurrence of LME cracking while the strength of the weld in the high strength steel sheet is maintained has not been proposed.

The present invention has been made in view of the foregoing circumstances, and it is an object to provide a welded member having a resistance spot weld which can have high strength even in a high strength steel sheet and in which the occurrence of LME cracking is prevented and to provide a method for producing the welded member.

Solution to Problem

To achieve the above object, the inventors have conducted extensive studies.

The effects of the invention on cracking (LME cracking) that occurs during welding cannot be described simply because various influencing factors are involved in a complex manner. However, LME cracking tends to occur in a resistance spot weld when excessively large tensile residual stress is generated in the resistance spot weld due to work disturbances etc. during welding. In particular, it is known that, on a steel sheet faying surface side on which the steel sheets are in contact with each other, LME cracking is likely to occur in a region in which large local tensile stress is generated when the pair of welding electrodes are released after completion of energization and pressurization for resistance spot welding.

With regard to the influence of components of a steel sheet, it is known that, as the amount of Si increases, the LME cracking resistance of the steel sheet deteriorates, as described in reference 1. Therefore, by internally oxidizing Si in the vicinities of the steel sheet surfaces in a weld heat affected zone to fix Si in the form of oxide, the amount solute Si can be reduced, and this may be effective in preventing LME cracking.

[Reference 1] International Publication No. WO2021/200412

However, even when Si is internally oxidized in the vicinities of the steel sheet surfaces, if the internal oxide of Si, in particular the internal oxide on the steel sheet faying surface sides of the steel sheets, disappears due to the influence of heat during welding, the intended effects of the invention are not obtained. Specifically, the inventors have arrived at the idea that, by controlling the Si concentration ratio in a steel sheet surface layer in the weld heat affected zone within a given range, the strength of the resistance spot weld can be ensured and also the occurrence of LME cracking can be prevented.

To allow a Si internally oxidized layer to be present in the weld heat affected zone as described above, it is necessary to adjust the amount of internally oxidized Si in the base metal to set to be more than or equal to a given value. To facilitate the formation of the internally oxidized Si in the base metal, it is effective to increase, for example, the annealing dew point of the steel sheet as described later. The amount of the internally oxidized Si in the base metal has a correlation with the amount of oxygen in the steel sheet surface layer. Therefore, by adjusting the amount of oxygen in the steel sheet surface layer to more than or equal to a certain value, the amount of the Si internally oxidized layer present in the base metal can be adjusted to be more than or equal to a certain value, and the internal oxide of Si in the weld heat affected zone can be prevented from disappearing.

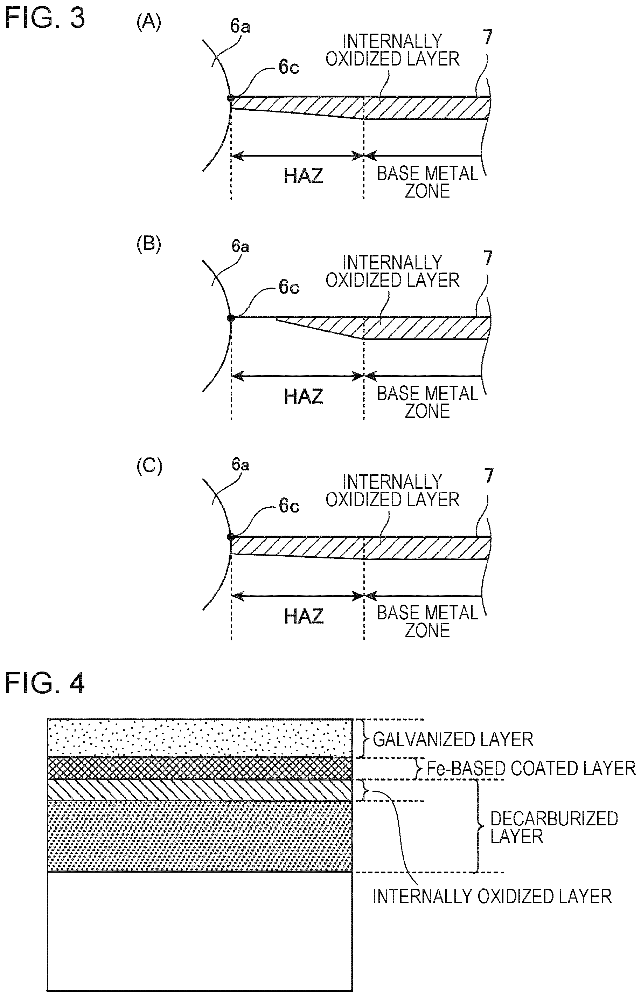

As shown in Figs. 3(A) to 3(C), a welded member obtained by resistance-spot-welding a sheet set including a steel sheet having an internally oxidized layer in a steel sheet surface layer has the internally oxidized layer in the surface layer of the lower sheet that is located on the steel sheet faying surface 7 side. In each of the examples shown in Figs. 3(A) to 3(C), the steel sheet having the internally oxidized layer is used as the lower sheet. The internally oxidized layer is present in a weld heat affected zone (HAZ) and in a base metal zone. As shown in Fig. 3(A), the internally oxidized layer in the weld heat affected zone basically decreases in thickness when approaching a nugget 6a. However, as the influence of heat during welding increases, part of the internally oxidized layer in the weld heat affected zone may disappear completely due to diffusion of elements such as C as shown in Fig. 3(B), or the internally oxidized layer in the weld heat affected zone may not substantially disappear but remain as shown in Fig. 3(C). In the present invention, internally oxidized layers present in weld heat affected zones that include those in the states shown in Figs. 3(A) to 3(C) are collectively referred to as the "internally oxidized layer in the steel sheet surface layer in the weld heat affected zone."

The present invention is based on the above findings and summarized as follows.

[1] A welded member having a resistance spot weld formed by resistance-spot-welding a sheet set including two or more overlapping steel sheets,

wherein a total thickness of the sheet set is denoted as $t_{all}$ (mm), wherein a minimum thickness of the resistance spot weld is denoted as $t_{weld}$ (mm), wherein $t_{all}$ (mm) and $t_{weld}$ (mm) satisfy formula (1),
wherein at least one of the two or more steel sheets is a steel sheet having an internally oxidized layer in a steel sheet surface layer,
wherein, in a base metal zone in the steel sheet having the internally oxidized layer, an amount of oxygen per unit area in the internally oxidized layer on a steel sheet faying surface side is denoted as Os ($g/m^2$), and Os satisfies formula (2),
wherein, in a weld heat affected zone in the steel sheet having the internally oxidized layer, a position on a steel sheet faying surface in an edge portion of a corona bond is defined as a starting point, and a density of oxide containing Si in a first region defined by a range extending $\pm 50$ $\mu$m from the starting point as a center in directions parallel to the steel sheet faying surface and a range extending 10 $\mu$m from the starting point in a thickness direction is denoted as Ns (particles/$\mu m^2$), wherein Ns satisfies formula (3),
wherein, in the weld heat affected zone in the steel sheet having the internally oxidized layer, an average concentration of Si in a second region defined by the range extending $\pm 50$ $\mu$m from the starting point as the center in the directions parallel to the steel sheet faying surface and a range extending 5 $\mu$m from the starting point in the thickness direction is denoted as Ss (% by mass), and an average concentration of Si in a third region having a 100 $\mu$m $\times$ 100 $\mu$m square shape with a center located at a position spaced 1/4 a thickness from the starting point in the thickness direction is denoted as St (% by mass), and wherein Ss and St satisfy formula (4):

$$0.5 < t_{weld} \, / \, t_{all} < 1.0, \qquad (1)$$

$$0.02 < Os < 1.0, \qquad (2)$$

$$0.01 \leq Ns, \qquad (3)$$

$$Ss / St < 1.0. \qquad (4)$$

[2] The welded member according to [1], wherein a thickness of the steel sheet is denoted as t (mm), wherein a tensile strength of the steel sheet is denoted as TS (MPa), wherein an average content of Si in the steel sheet is denoted as Si (% by mass),

wherein the steel sheet having the internally oxidized layer satisfies formula (5):

$$\{(t + Si + TS / 1000) - 1.4\} / 66 + 0.01 \leq Ns, \qquad (5)$$

where, in formula (5), Ns (particles/$\mu m^2$) is the density of the oxide containing Si in the first region.

[3] The welded member according to [1] or [2], wherein, in the steel sheet having the internally oxidized layer, Ss and St satisfy formula (7):

$$\{(t + Si + TS / 1000) - 1.4\} / 66 < Ss / St < \{(t + Si \qquad (7) \qquad\qquad (7)$$

where, in formula (7), t (mm) is a thickness of the steel sheet having the internally oxidized layer, TS (MPa) is a tensile strength of the steel sheet having the internally oxidized layer, and Si (% by mass) is an average content of Si in the steel sheet having the internally oxidized layer.

[4] The welded member according to any one of [1] to [3], wherein the steel sheet having the internally oxidized layer includes a decarburized layer and/or a galvanized layer.

[5] The welded member according to [4], an Fe-based precoated layer is disposed below the galvanized layer.

[6] The welded member according to any one of [1] to [5], wherein an average of a shortest distance from a center of a welding point of the resistance spot weld to an end face of the steel sheets is 3 mm or more, and

wherein, when the welded member has a plurality of the welding points, an average of center-to-center distances between adjacent ones of the welding points is 6 mm or more.

[7] A method for producing the welded member according to any one of [1] to [6], the method including:

a preparation step of disposing the two or more steel sheets so as to overlap each other to form the sheet set; and a welding step of resistance-spot-welding the sheet set,

wherein, in the welding step,

the sheet set is held between a pair of welding electrodes to perform energization for joining under application of pressure, and

one or two or more of states (a) to (e) are satisfied at at least one welding point immediately before the application of the pressure by the welding electrodes,

wherein the welding step includes

an energization step of performing the energization at a welding pressure of 2.0 to 10.0 kN and a welding current of 4.0 to 15.0 kA for an energization time of 0.1 to 2.0 S and

an electrode holding step in which, when a welding pressure holding time after completion of the energization is denoted as Th (S), Th satisfies the relation of formula (8) :

(a) a state in which an inclination angle between the welding electrodes and the overlapping steel sheets is 0.2 degrees or more;

(b) a state in which an amount of offset between the pair of welding electrodes is 0.1 mm or more;

(c) a state in which a gap of 0.5 mm or more is present between one of the welding electrodes and the overlapping steel sheets;

(d) a state in which a gap of 0.5 mm or more is present between at least one pair of steel sheets among the overlapping steel sheets; and

(e) a state in which a shortest distance from a center of the at least one welding point to a steel sheet end face of the overlapping steel sheets is 10 mm or less:

$$\{(t + Si + TS / 1000) - 1.4\} / 132 < Th < [-\{(t + Si + TS / 1000) - 1.4\} / 66] + 1.1, (8) \qquad\qquad (8)$$

where, in formula (8), t (mm) is a thickness of the steel sheet having the internally oxidized layer, TS (MPa) is a tensile strength of the steel sheet having the internally oxidized layer, and Si (% by mass) is an average content of Si in the steel sheet having the internally oxidized layer.

Advantageous Effects of Invention

In the present invention, even with resistance spot welding using a high strength steel sheet, a welded member and a method for producing the welded member can be provided in which a reduction in strength of the resistance spot weld caused by an increase in the amount of Si in the vicinity of the surface of the steel sheet can be prevented and no LME cracking occurs.

Brief Description of Drawings

[Fig. 1] Fig. 1 is a cross-sectional view schematically showing an example of resistance spot welding in the invention.
[Fig. 2] Fig. 2 shows cross-sectional views schematically showing a resistance spot weld of a welded member in one embodiment of the invention and the periphery thereof.
[Fig. 3] Figs. 3(A) to 3(C) are enlarged cross-sectional views each illustrating an internally oxidized layer in a steel sheet surface layer in a weld heat affected zone.
[Fig. 4] Fig. 4 is a cross-sectional view in a thickness direction illustrating an example of a steel sheet used in the invention and having an internally oxidized layer in a steel sheet surface layer.
[Fig. 5] Fig. 5 is an illustration explaining the shortest distance ($H_1$) from the center of a welding point to an end face of steel sheets in the welded member of the invention.
[Fig. 6] Fig. 6 is an illustration explaining the center-to-center distance ($H_2$) between adjacent welding points in the welded member of the invention.
[Fig. 7] Fig. 7 is a cross-sectional view illustrating an example of a tensile test in Examples of the invention when a sheet set including three sheets is used.
[Fig. 8] Fig. 8 is a cross-sectional view schematically showing an example of the occurrence of cracking during conventional resistance spot welding.

Description of Embodiments

Referring to Figs. 1 to 6, embodiments of the welded member of the invention and the method for producing the welded member will be described. However, the invention is not limited to these embodiments.
First, the welded member of the invention will be described.

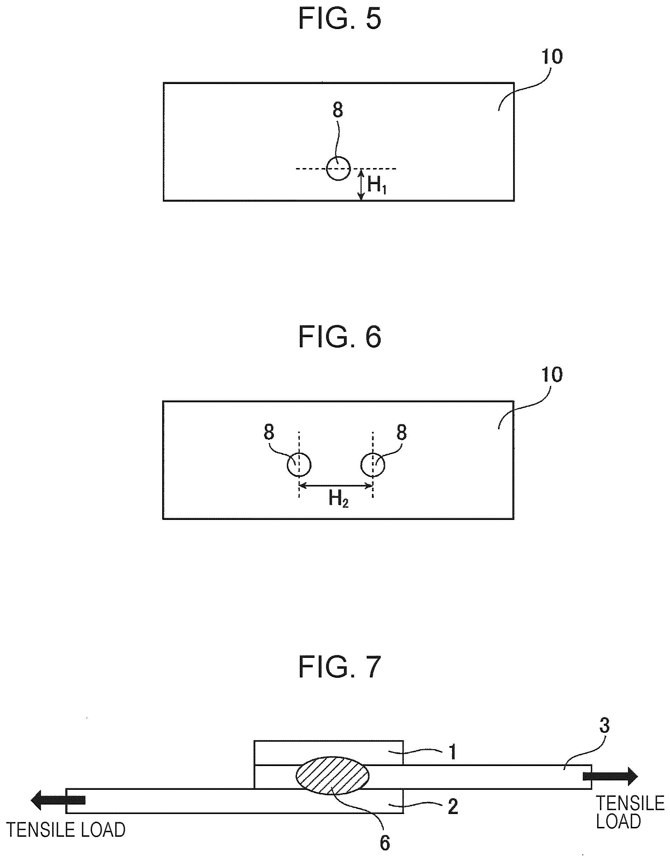

Fig. 2 shows a cross-sectional view in a thickness direction illustrating an example of the welded member of the invention and a partial enlarged cross-sectional view of a resistance spot weld in the welded member and the periphery thereof. The portion shown in the enlarged cross-sectional view is a region surrounded by a rectangular frame in Fig. 2. Figs. 3(A) to 3(C) are cross-sectional views each showing an internally oxidized layer in a weld heat affected zone and show the region surrounded by the rectangular frame in Fig. 2. Fig. 4 is a cross-sectional view in a thickness direction illustrating a steel sheet used in the invention and having an internally oxidized layer. Figs. 5 and 6 are top views showing the vicinities of resistance spot welds in welded members (i.e., illustrations of the welded members viewed from above).
The present invention is a welded member 10 having a resistance spot weld (hereinafter referred to as a "weld") formed by resistance-spot-welding a sheet set including two or more overlapping steel sheets.
In the welded member of the invention, at least one of the two or more overlapping steel sheets is a steel sheet having an internally oxidized layer in a steel sheet surface layer (see Fig. 4) as described later. No particular limitation is imposed on the number of steel sheets so long as the number is two or more. The number of steel sheets is preferably 3 or more. No particular limitation is imposed on the upper limit of the number of steel sheets, but the number is preferably 5 or less.
Fig. 2 shows an example of the welded member 10 including two overlapping steel sheets welded together. Both or one of the lower steel sheet 2 (i.e., the lower sheet) and the upper steel sheet 1 (i.e., the upper sheet) is the steel sheet having the internally oxidized layer described above. A weld 6 described later is formed at a steel sheet faying surface 7 at which the steel sheets 1 and 2 are in contact with each other.
In the welded member in the example shown in Fig. 2, only the lower sheet 2 is the steel sheet having the internally oxidized layer, and the upper sheet 1 is a steel sheet having no internally oxidized layer. In this case, the weld 6 in the invention is formed only on the steel sheet faying surface 7 side of the lower sheet 2. When the upper and lower sheets 1 and 2 used are each the steel sheet having the internally oxidized layer in the invention, the weld 6 in the invention is formed on both the upper sheet 1 side and the lower sheet 2 side of the steel sheet faying surface 7.

Although not illustrated, when three or more overlapping steel sheets are welded together, all or at least one of the lowermost steel sheet (i.e., the lower sheet), the uppermost steel sheet (i.e., the upper sheet), and a steel sheet (i.e., a middle sheet) disposed therebetween is the steel sheet having the internally oxidized layer. The weld in the invention is formed so as to include the steel sheet faying surfaces between the steel sheets.

For example, in a sheet set including three steel sheets, the weld in the invention is formed so as to include two steel sheet faying surfaces at which the lower and middle sheets and the middle and upper sheets are in contact with each other. When the three steel sheets used are each the steel sheet having the internally oxidized layer, the internal oxidation in the steel sheet surface layers on the upper and lower sides of each steel sheet faying surface is controlled.

<Weld>

The weld in the invention will be described in detail. The weld formed in a steel set including two overlapping steel sheets is similar to the weld formed in a steel set including three or more overlapping steel sheets, and therefore Fig. 2 will be used for the following description.

As shown in Fig. 2, in the weld 6 in the invention, the total thickness of the sheet set is denoted as $t_{all}$ (mm), and the minimum thickness of the weld is denoted as $t_{weld}$ (mm). Then the total thickness ($t_{all}$), and the minimum thickness ($t_{weld}$) of the weld satisfy the following formula (1).

$$0.5 < t_{weld} / t_{all} < 1.0 \qquad (1)$$

If the ratio ($t_{weld}/t_{all}$) of the minimum thickness of the weld to the total thickness does not satisfy formula (1) above, in particular if the ratio ($t_{weld}/t_{all}$) is less than or equal to the lower limit of formula (1), the reduction in the thickness of the weld 6 is significantly large, and tensile residual stress generated in the weld 6 is excessively large. In this case, LME cracking tends to occur, and the joint strength decreases. The thickness of the sheet set is reduced by the pressurization by the pair of welding electrodes and the influence of heat during welding. Therefore, the upper limit of $t_{weld}/t_{all}$ is less than 1.0.

The lower limit of formula (1) is preferably 0.55 or more, and the upper limit of formula (1) is preferably 0.95 or less.

The "minimum thickness ($t_{weld}$) of the weld" is the minimum thickness in the thickness direction in a region extending in the width direction within a nugget 6a, as shown in Fig. 2. The minimum thickness ($t_{weld}$) can be measured by a method described later in Examples.

As described above, the purpose of the internal oxidation in the vicinity of the steel sheet surface layer in the weld heat affected zone in the invention is to reduce the amount of solute Si. Accordingly, in the present invention, in addition to the conditional expression for the thickness ratio described above, conditional expressions described below are specified in the base metal zone and the weld heat affected zone in the steel sheet having the internally oxidized layer (the lower sheet 2 in the example shown in Fig. 2).

Specifically, in the in the base metal zone in the steel sheet having the internally oxidized layer, the amount of oxygen per unit area in the internally oxidized layer on the steel sheet faying surface side is denoted as Os ($g/m^2$), and the oxygen (Os) satisfies the following formula (2).

$$0.02 < Os < 1.0 \qquad (2)$$

If formula (2) above is not satisfied, in particular Os is 0.02 or less, the amount of the internally oxidized Si is small, and almost all the internally oxidized layer in the vicinity of the steel sheet surface layer disappears under the influence of welding heat. In this case, it is difficult to achieve the reduction in the amount of solute Si in the surface layer in the weld heat affected zone described later. If Os is 1.0 or more, oxidation is significant not only in the grains but also at the grain boundaries. In this case, as a result of the oxidation of the grain boundaries, the sensitivity to LME increases, and the effect of preventing cracking cannot be obtained.

The lower limit of formula (2) is preferably 0.08 or more and more preferably 0.1 or more. The upper limit of formula (2) is preferably 0.8 or less.

The "amount of oxygen (Os) per unit area in the internally oxidized layer on the steel sheet faying surface side" can be measured by a method described later in Examples.

Moreover, in the weld heat affected zone in the steel sheet having the internally oxidized layer, a position on the steel sheet faying surface in an edge portion of a corona bond is defined as a starting point (point A shown in Fig. 2). The density of oxide containing Si in a region (first region 9a) defined by a range extending $\pm 50~\mu m$ from the starting point as a center in directions parallel to the steel sheet faying surface (i.e., width directions) and a range extending 10 $\mu m$ from the starting point in the thickness direction (i.e., a direction perpendicular to the steel sheet faying surface) is denoted as Ns (particles/$\mu m^2$). Then the density (Ns) of the oxide containing Si satisfies formula (3).

The average concentration of Si excluding the oxide containing Si in a region (second region 9b) defined by the

range extending $\pm 50$ $\mu$m from the starting point as the center in the directions parallel to the steel sheet faying surface and a range extending 5 $\mu$m from the starting point in the thickness direction is denoted as Ss (% by mass). The average concentration of Si in a region (third region 9c) a 100 $\mu$m $\times$ 100 $\mu$m square shape with a center located at a position spaced 1/4 the thickness from the starting point in the thickness direction is denoted as St (% by mass). Then the ratio of the average Si concentration in the second region 9b to the average Si concentration in the third region 9c satisfies formula (4) (see Fig. 2).

$$0.01 \leq Ns \qquad (3)$$

$$Ss / St < 1.0 \qquad (4)$$

If the density (Ns) of the oxide is less than 0.01 (particles/$\mu$m$^2$), the degree of internal oxidation of Si is insufficient, and the amount of solute Si in the vicinity of the steel sheet surface layer in the weld heat affected zone is high, so that LME cracking tends to occur. Therefore, it is effective that, in the first region, the relation of formula (3) ($0.01 \leq Ns$) is satisfied. It is more effective when the density of the oxide satisfies preferably the relation $0.02 \leq Ns$, and it is still more effective when the density of the oxide satisfies more preferably the relation of $0.05 \leq Ns$.

No particular limitation is imposed on the upper limit of the oxide density. However, from the viewpoint of preventing excessive oxidation at the grain boundaries, the oxide density (Ns) is preferably 100 (particles/$\mu$m$^2$) or less. The oxide density (Ns) is more preferably 20 (particles/$\mu$m$^2$) or less.

If the ratio (Ss/St) of the average Si concentration in the second region to the average Si concentration in the third region is 1.0 or more, the amount of solute Si in the vicinity of the steel sheet surface layer in the weld heat affected zone is large, so that the effect of preventing LME cracking cannot be obtained. The average Si concentration ratio satisfies preferably the relation Ss / St < 0.9 and more preferably the relation Ss /St < 0.7.

No particular limitation is imposed on the lower limit of the average Si concentration ratio. Even when the internal oxidation is facilitated, it is difficult to reduce the amount of solute Si to zero. Therefore, the average Si concentration ratio (Ss/St) is preferably 0.05 or more and more preferably 0.10 or more.

The oxide density (Ns) and the average Si concentration ratio (Ss, St) can be measured by methods described later in Examples.

With the structure described above, the strength of the weld can be ensured, and also the occurrence of LME cracking can be prevented.

<Steel sheets>

[Thickness and tensile strength]

LME cracking may tend to occur when the thickness of each overlapping steel sheet, the content of Si therein, and its tensile strength increase. Specifically, as the content of Si in the base metal or the tensile strength increases, the LME cracking resistance of the steel sheet deteriorates. In this case, LME cracking cannot be prevented unless the degree of internal oxidation is increased to reduce the amount of solute Si. Specifically, the amount of internal oxide effective in preventing LME cracking in the weld heat affected zone may increase according to the increase in these parameters.

Therefore, in the present invention, it is preferable that the density (Ns) of the oxide containing Si in the vicinity of the steel sheet surface layer is appropriately controlled according to these parameters. In this manner, the effects of the invention can be obtained more effectively.

Specifically, the thickness of a steel sheet is denoted as t (mm), and the tensile strength of the steel sheet is denoted as TS (MPa). Moreover, the average content of Si in the steel sheet is denoted as Si (% by mass). Then it is preferable that the steel sheet having the internally oxidized layer satisfies the following formula (5).

$$\{(t + Si + TS / 1000) - 1.4\} / 66 + 0.01 \leq Ns \qquad (5)$$

In formula (5), Ns is the density of the oxide containing Si in the first region.

From the viewpoint of controlling the density (Ns) of the oxide containing Si more appropriately, it is more preferable that the following formula (6) is satisfied in addition to the above conditional expression (formula (5)).

$$1.4 \leq t + Si + TS / 1000 \leq 8.0 \qquad (6)$$

When the thickness (t) of the steel sheet having the internally oxidized layer is large, if the weld heat affected zone is deformed significantly by welding work disturbances, thermal stress increases locally, and LME cracking tends to occur.

Therefore, the larger the thickness (t) of the steel sheet, the larger the preferred lower limit of Ns.

When the tensile strength (TS) of the steel sheet having the internally oxidized layer is large, martensitic transformation occurs due to the influence of heat during welding, so that the weld heat affected zone generally tends to be hardened. In this case, the difference in Si concentration between the internally oxidized layer in the steel sheet surface layer and the inside of the steel sheet is large, and this causes the surface layer in the weld heat affected zone to be softened, and therefore the strength of the weld tends to be lowered. Specifically, the higher the tensile strength (TS) of the steel sheet, the larger the preferred lower limit of Ns.

When the average content (Si) of Si in the steel sheet having the internally oxidized layer is large, it is necessary to reduce the amount of solute Si by increasing the degree of internal oxidation.

Therefore, from the viewpoint of the thickness (t) of the steel sheet, the tensile strength (TS), and the average Si content (Si) in the steel sheet, it is preferable that Ns satisfies formula (5).

The lower limit of formula (5) is preferably more than or equal to {(t + Si + TS / 1000) - 1.4} / 66 + 0.03. The upper limit of formula (5) is preferably 100 or less.

For the reasons described above, it is more preferable that formula (6) is further satisfied. The lower limit of formula (6) is preferably 2.5 or more, and the upper limit of formula (6) is preferably 7.0 or less.

In the present invention, as in the case described above, the ratio of reduction in the concentration of solute Si in the vicinity of the steel sheet surface layer that is effective in preventing LME cracking in the weld heat affected zone may change according to the increase in the thickness of the steel sheet, the content of Si, and the tensile strength.

Specifically, the thickness of the steel sheet is denoted as t (mm), and the tensile strength of the steel sheet is denoted as TS (MPa). Moreover, the average content of Si in the steel sheet is denoted as Si(% by mass). Then it is preferable that, in the steel sheet having the internally oxidized layer, the average Si concentration ratio (Ss/St) satisfies formula (7). In this case, the effects of the invention can be obtained more effectively.

$$\{(t + Si + TS / 1000) - 1.4\} / 66 < Ss / St < \{(t + Si + TS / 1000) - 1.4\} / 66 + 0.9 \ (7) \tag{7}$$

The reason that the lower limit is provided for the average Si concentration ratio (Ss/St) in formula (7) is as follows. To significantly reduce the concentration of solute Si in the vicinity of the surface layer in the weld heat affected zone surface layer, it is necessary to use a steel sheet production method that allows not only the concentration of Si in the vicinity of the steel sheet surface layer but also the concentrations of other elements to be reduced. Therefore, it is feared that the steel sheet surface layer in the weld heat affected zone may be softened significantly. In particular, when excessive softening occurs at the faying surface between the steel sheets, the strength of the weld decreases. Therefore, it is preferable to provide the lower limit for the average Si concentration ratio (Ss/St).

The reason that the upper limit is provided for formula (7) is as follows. When the average Si concentration ratio (Ss/St) is excessively large, the amount of solute Si in the surface layer in the weld heat affected zone is large. In this case, the effect of preventing LME cracking cannot be obtained.

As described above, as the strength of the steel sheet increases and the amounts of alloying elements increase, the likelihood of the occurrence of LME cracking generally increases. Therefore, in the present invention, the tensile strength of the steel sheet having the decarburized layer is preferably TS ≥ 980. This is because, when the high strength steel sheet satisfies this relation, the effects of the invention can be obtained more effectively.

[Steel sheet having internally oxidized layer]

In the present invention, at least one of the two or more overlapping steel sheets is a steel sheet having a internally oxidized layer in a steel sheet surface layer as described above. Referring to Fig. 4, the steel sheet having the internally oxidized layer in the steel sheet surface layer will be described. Fig. 4 shows an example of the steel sheet having the internally oxidized layer in the steel sheet surface layer. Examples of the steel sheet having the internally oxidized layer include a galvanized steel sheet having a galvanized layer on the internally oxidized layer and a steel sheet having a decarburized layer including an internally oxidized layer as the outermost surface layer.

No particular limitation is imposed on the method for forming the internally oxidized layer in the steel sheet surface layer of the steel sheet used in the invention.

Fig. 4 shows, as an example, a steel sheet having a structure including a decarburized layer, a Si internally oxidized layer, a galvanized layer, and an Fe-based precoated layer described later.

[Galvanized steel sheet]

LME cracking is a phenomenon that occurs when tensile stress is applied to a steel sheet with molten zinc in contact with the steel sheet. Therefore, in the present invention, it is preferable that the steel sheet having the internally oxidized layer is a galvanized steel sheet. This is because, with the galvanized steel sheet, the effects of the invention can be obtained more effectively. In particular, with consideration also given to the pressability and continuous spot-weldability of the steel sheets, the galvanized steel sheet is more preferably a hot-dip galvannealed steel sheet (GA steel sheet), a hot-dip galvanized steel sheet (GI steel sheet), or an electrogalvanized steel sheet (EG steel sheet).

As shown in Fig. 4, the galvanized steel sheet may include the Fe-based precoated layer below the galvanized layer. By forming the Fe-based precoated layer, the amount of solute Si in the steel sheet surface layer can be reduced.

[Fe-based precoated layer]

Preferably, the precoated layer is an Fe-based electroplated layer. Examples of the Fe-based electroplated layer that can be used include, in addition to pure iron, alloy coated layers such as an Fe-B alloy, an Fe-C alloy, an Fe-P alloy, an Fe-N alloy, an Fe-O alloy, an Fe-Ni alloy, an Fe-Mn alloy, an Fe-Mo alloy, and an Fe-W alloy. No particular limitation is imposed on the chemical composition of the Fe-based electroplated layer. However, in the present invention, it is preferable that the chemical composition contains one or two or more elements selected from the group consisting of B, C, P, N, O, Ni, Mn, Mo, Zn, W, Pb, Sn, Cr, V, and Co in a total amount of 10% by mass or less with the balance being Fe and incidental impurities. By setting the total amount of elements other than Fe to 10% by mass or less, a reduction in electrolysis efficiency is prevented, and the Fe-based electroplated layer can be formed at low cost.

The coating weight per side of the Fe-based electroplated layer is preferably $0.5 \, \text{g/m}^2$ or more. The coating weight is more preferably $1.0 \, \text{g/m}^2$ or more. No particular limitation is imposed on the upper limit of the coating weight per side of the Fe-based electroplated layer. From the viewpoint of cost, the coating weight per side of the Fe-based electroplated layer is preferably $60 \, \text{g/m}^2$ or less. The coating weight is preferably $50 \, \text{g/m}^2$ or less, more preferably $40 \, \text{g/m}^2$ or less, and still more preferably $30 \, \text{g/m}^2$ or less.

The thickness of the Fe-based electroplated layer is measured as follows. After the hot-dip galvanization, a $10 \times 15$ mm sample is cut from the high-strength hot-dip galvannealed steel sheet and embedded in a resin to prepare a cross-section-embedded sample. The cross section of the sample is observed at three randomly selected points using a scanning electron microscope (SEM) at an acceleration voltage of 15 kV at a magnification of 2000X to 10000X depending on the thickness of the Fe-based electroplated layer. The average value of the thicknesses in the three viewing fields is determined and multiplied by the specific gravity of iron to convert the thickness to the coating weight per side of the Fe-based electroplated layer.

It is preferable that the surface of an unannealed high strength cold rolled steel sheet is subjected to Fe-based electroplating treatment to obtain an unannealed Fe-based electroplated steel sheet. No particular limitation is imposed on the Fe-based electroplating treatment method. For example, the Fe-based electroplating bath used may be a sulfuric acid bath, a hydrochloric acid bath, or a mixture thereof. The unannealed high strength cold rolled steel sheet subjected to cold rolling may be subjected to the Fe-based electroplating treatment without oxidation treatment in, for example, a preheating furnace.

The content of Fe ions in the Fe-based electroplating bath before the start of energization is preferably 1.0 mol/L or more in terms of $Fe^{2+}$. When the content of Fe ions in the Fe-based electroplating bath is 1.0 mol/L or more in terms of $Fe^{2+}$, the coating weight of Fe is sufficient.

By using the steel sheet described above, the effects of the invention can be obtained more effectively. In particular, when a hot-dip galvannealed steel sheet subjected to pre-plating before the formation of the galvanized layer and then subjected to galvannealing treatment after the hot-dip galvanization is used, the effects of the invention are still more effective.

[Decarburized layer]

For example, the steel sheet shown in Fig. 4 includes the Si internally oxidized layer within the decarburized layer. In this case, the Si internally oxidized layer can be formed as the outermost surface layer of the steel sheet by increasing the dew point during annealing when the steel sheet is produced, and the behavior of the other alloying elements during the formation of the Si internally oxidized layer is also controlled. By using this steel sheet, the effects of the invention can be obtained more effectively.

Specifically, the "Si internally oxidized layer" is a region in which the Si oxide is formed in crystal grains and/or part of crystal grain boundaries.

<Welding points in welded member>

Welding points in the welded member will be described using Figs. 5 and 6. Figs. 5 and 6 are top views showing the vicinities of the welds of the welded members (illustrations of the members as viewed from above).

As shown in Figs. 5 and 6, in the welded member 10 in the invention, the average of the shortest distances ($H_1$)

from the centers of welding points of welds to an end face of the steel sheets is 3 mm or more. When a plurality of welding points is present, the average ($H_2$) of the center-to-center distances between adjacent welding points is preferably 6 mm or more.

The "average ($H_1$) of the shortest distances from the centers of the welding points of the welds to the end face of the steel sheets" is determined by specifying an end face of the steel sheets closest to the centers of the welding points 8 and measuring the distances from the welding points to the end face, as shown in Fig. 5. When the number of welding points in the welded member is five or more, the average for five appropriately selected welding points is used as the "average shortest distance." When the number of welding points in the welded member is less than 5, the average for all the welding points is used as the "average shortest distance."

If the average shortest distance ($H_1$) is less than 3 mm, the sheets around the nuggets are insufficiently pressed on the steel sheet end face side, so that the molten metal easily splashes from the gap between the sheets toward the steel sheet end face. Therefore, splashes occur significantly during welding, and variations in nugget diameters are likely to increase, so that the strength of the welds becomes unstable. No limitation is imposed on the upper limit of the average shortest distance. To allow a welding gun having a general shape to be used for welding, the average shortest distance ($H_1$) is preferably 1000 mm or less and more preferably 30 mm or less.

As shown in Fig. 6, the "average ($H_2$) of the center-to-center distances between adjacent welding points" is determined by measuring the center-to-center distances between adjacent welding points 8. If the average ($H_2$) of the center-to-center distances between welding points is less than 6 mm, a diverted flow to an existing welding point occurs during welding, and the current density in the weld decreases. In this case, the nugget diameter tends to be small, and the strength of the weld tends to decrease. Moreover, the weld is restrained by the existing welding point, and the tensile residual stress increases, so that LME cracking tends to occur. No limitation is imposed on the upper limit of the average of the center-to-center distances between welding points. From the viewpoint of ensuring the strength and stiffness of the welded member, the average ($H_2$) of the center-to-center distances between welding points is preferably 100 mm or less and more preferably 60 mm or less. The average ($H_2$) of the center-to-center distances between welding points is preferably 10.0 mm or more.

In the welded member of the invention, the number of welding points may be only one. In this case, it is only necessary that, among the above welding point conditions, the condition that the "average of the shortest distance ($H_1$) from the center of the welding point of the weld to the end face of the steel sheets is 3 mm or more" be satisfied.

Next, an embodiment of a method for producing the welded member of the invention will be described.

The welded member of the invention is produced through a production process including a preparation step of disposing two or more steel sheets so as to overlap each other to prepare a sheet set and a welding step of resistance-spot-welding the sheet set.

<Preparation step>

In this step, two or more steel sheets including at least one steel sheet having the internally oxidized layer described above are prepared. Then the two or more steel sheets are disposed so as to overlap each other to prepare a sheet set. Fig. 1 shows an example in which two steel sheets are resistance-spot-welded together. In the example shown in Fig. 1, the two overlapping steel sheets 1 and 2 are used to prepare a sheet set. The description of the steel sheets has already been provided and will be omitted. Next, the welding step is performed.

<Welding step>

The welding step includes an energization step and an electrode holding step described later. In the welding step, the sheet set prepared in the preparation step is joined together. In this step, as shown, for example, in Fig. 1, the sheet set is held between a pair of welding electrodes 4 and 5 disposed on the upper and lower sides of the sheet set and then energized under the application of pressure using the pair of welding electrodes 4 and 5 while the welding conditions are controlled to prescribed conditions. In this manner, the weld 6 in the invention described above is formed between the steel sheets 1 and 2 at the steel sheet faying surface 7 of the steel sheets, and the steel sheets can thereby be joined together (see Fig. 2).

When a steel sheet having an internally oxidized layer and a steel sheet having no internally oxidized layer are used to prepare a sheet set, they are stacked such that the side with the internally oxidized layer is present at the steel sheet faying surface. When the steel sheet having the internally oxidized layer is a galvanized steel sheet (a GI steel sheet, a GA steel sheet, or an EG steel sheet) having a galvanized layer, the steel sheets are stacked such that the side with the galvanized layer is present at the steel sheet faying surface. There is, of course, no problem if the internally oxidized layer and/or the galvanized layer is present also at the steel sheet surface in contact with a welding electrode.

A welder usable for the resistance spot welding method in the present invention may be a welder that includes a pair of upper and lower welding electrodes and can perform welding while the welding pressure and the welding current are controlled freely. The present invention is applicable to both DC and AC welding power sources. When AC is used, the "current" means the "effective current." No particular limitation is imposed on the pressurizing mechanism (such as an air cylinder or a servo motor) of the welder, its type (e.g., a stationary or robot gun type), and the shape of the electrodes. Examples of the type of welding electrode tip include a DR type (dome radius type), an R type (radius type), and a D type (dome type) specified in JIS C 9304: 1999. The tip diameter of the welding electrodes is, for example, 4 mm to 16 mm.

Next, the welding conditions for the welding step in the invention will be described.

The welding step includes the energization step and the electrode holding step. In the welding step, the sheet set is held between the pair of welding electrodes to perform energization for joining under the application of pressure. In this case, one or two or more of states (a) to (e) described below are satisfied at at least one welding point immediately before the application of pressure by the welding electrodes. In the energization step, the energization is performed at a welding pressure of 2.0 to 10.0 kN and a welding current of 4.0 to 15.0 kA for an energization time of 0.1 to 2.0 S. In the electrode holding step, the welding pressure holding time after completion of the energization is denoted as Th (S), and Th satisfies the relation of formula (8).

[Energization step]

[Welding pressure, welding current, and energization time]

If the welding pressure is less than 2.0 kN, the pressurization of the steel sheets is insufficient. In this case, splashes are likely to occur, and LME cracking tends to occur. If the welding pressure exceeds 10.0 kN, a special welding gun designed for applying high pressure is needed, and many restrictions are placed on the facility. Moreover, the reduction in thickness of the weld is significant. Therefore, LME cracking may occur, and a reduction in joint strength may occur. The welding pressure is preferably 3.0 kN or more and is preferably 7.0 kN or less.

If the welding current is less than 4.0 kA, the heat input is insufficient, and a sufficient nugget diameter cannot be obtained. If the welding current exceeds 15.0 kA, the heat input is excessively large, and splashes are likely to occur, so that LME cracking tends to occur. The welding current is preferably 5.0 kA or more and is preferably 12.0 kA or less.

If the energization time is shorter than 0.1 S, the diffusion of alloying elements in the weld heat affected zone may be insufficient, and the thickness of the decarburized layer that is formed together with a solute Si layer in the weld heat affected zone may be almost unchanged relative to that in the base metal. In this case, a microstructure composed mainly of coarse ferrite is formed in the surface layer in the weld heat affected zone. Therefore, when a tensile load is applied, the microstructure in the surface layer easily undergoes necking, and this results in a reduction in TSS. If the energization time exceeds 2.0 S, the takt time in an automobile assembly process is long, and the productivity is low. The energization time is preferably 0.12 S or longer and is preferably 1.5 S or shorter.

The resistance spot welding may be performed using multiple welding pressures, multiple current values, or in a specific pattern using a combination of energization and non-energization. For example, when multiple welding pressures are used for the energization, the minimum welding pressure during the energization is set to 2.0 kN or more, and the maximum welding pressure is set to 10.0 kN or less. When multiple current values are used for the energization, the minimum current value during the energization except for a non-energization period is set to 4.0 kA or more, and the maximum current value is set to 15.0 kA or less. The total energization time except for the non-energization period is set to 0.1 S or longer and 2.0 S or shorter.

[Welding work disturbances]

In the present invention, when, in addition to the above conditions, one or two or more of the following states (a) to (e) are satisfied at at least one welding point immediately before the application of pressure by the welding electrodes during the production of the welded member, the effects of the invention can be obtained more effectively.

(a) A state in which the inclination angle between the welding electrodes and the overlapping steel sheets is 0.2 degrees or more.

(b) A state in which the amount of offset between the pair of welding electrodes is 0.1 mm or more.

(c) A state in which a gap of 0.5 mm or more is present between one of the welding electrodes and the overlapping steel sheets.

(d) A state in which a gap of 0.5 mm or more is present between at least one pair of steel sheets among the overlapping steel sheets.

(e) A state in which the shortest distance from the center of the welding point to a steel sheet end face of the overlapping steel sheets is 10 mm or less.

These welding work disturbances each cause the temperature of the weld and/or the tensile stress when the electrodes are released to increase locally. In the resulting state, LME cracking is more likely to occur. However, in the present invention, the surface layer of the weld is controlled. Therefore, even in the presence of these welding work disturbances, LME cracking can be prevented, and tolerances for work disturbance management during the production of the member are improved. The details of the work disturbances will next be described.

(a) The state in which the inclination angle between the welding electrodes and the overlapping steel sheets is 0.2 degrees or more.

The inclination angle means the angle of inclination of the electrodes with respect to the steel sheets, i.e., the "angle between the direction of the welding pressure from the electrodes and the thickness direction of the steel sheets." When the inclination angle is large, bending stress is applied to the weld, and large compressive plastic deformation occurs locally. In this case, the tensile stress after the electrodes are released is large, and LME cracking tends to occur. The effects of the invention can be obtained effectively when the inclination angle is 0.2 degrees or more. If the inclination angle is excessively large, the formation of the nugget is unstable, and this causes splashes to occur. Therefore, the inclination angle is preferably 10 degrees or less. The inclination angle is more preferably 1 degree or more and is more preferably 8 degrees or less.

(b) The state in which the amount of offset between the pair of welding electrodes is 0.1 mm or more.

The offset means the state in which the center axes of the pair of welding electrodes are not aligned with each other. If the offset amount is large, bending stress is applied to the weld, and LME cracking is more likely to occur, as in the case of the inclination angle described above. The effects of the invention can be obtained effectively when the offset amount is 0.1 mm or more. If the offset amount is excessively large, the formation of the nugget is unstable, and this causes splashes to occur. Therefore, the offset amount is preferably 5 mm or less. The offset amount is more preferably 0.2 mm or more and is more preferably 3 mm or less.

(c) The state in which a gap of 0.5 mm or more is present between one of the welding electrodes and the overlapping steel sheets.

When a gap is present between one of the electrodes and the steel sheets immediately before the start of the application of pressure, e.g., when one of the electrodes is movable (hereinafter referred to as a movable electrode) and the other electrode is fixed (hereinafter referred to as a fixed electrode) with a gap present between the fixed electrode and the steel sheets, the movable electrode is used to start the application of pressure. In this case, the steel sheets are bent, and therefore bending stress is applied to the weld, so that LME cracking tends to occur. The effects of the invention can be obtained effectively when the gap width is 0.5 mm or more. If the gap width is excessively large, the formation of the nugget is unstable, and this causes splashes to occur. Therefore, the gap width is preferably 5 mm or less. The gap width is more preferably 1 mm or more and is more preferably 3 mm or less.

(d) The state in which a gap of 0.5 mm or more is present between at least one pair of steel sheets among the overlapping steel sheets.

When a gap is present between steel sheets immediately before the application of the pressure, bending deformation occurs in the steel sheets, and bending stress is applied to the weld, so that LME cracking tends to occur, as in the case of (c) described above. The effects of the invention can be obtained effectively when the gap width is 0.5 mm or more. If the gap width is excessively large, the formation of the nugget is unstable, and this causes splashes to occur. Therefore, the gap width is preferably 4 mm or less. The gap width is more preferably 1 mm or more and is more preferably 3 mm or less. The phrase "a gap is present between at least one pair of steel sheets" means as follows. In two or more overlapping steel sheets, two steel sheets disposed in the vertical direction are defined as a pair of steel sheets. The above phrase means that a gap is present between at least one pair of steel sheets.

(e) The state in which the shortest distance from the center of the welding point to the steel sheet end face of the overlapping steel sheets is 10 mm or less.

If the shortest distance from the center of the welding point to the steel sheet end face is small, the cooling rate of the weld decreases because heat conduction from the weld is inhibited at the steel sheet end face. In this case, the temperature when the electrodes are released is high, and LME cracking tends to occur. The effects of the invention can be obtained effectively when the shortest distance from the center of the welding point to the steel sheet end face is 10 mm or less. As described above, if the shortest distance is less than 3 mm, the occurrence of splashes during welding is significant. In this case, variations in nugget diameter tend to be large, and the strength of the welds is unstable. Therefore, the shortest distance is preferably 3 mm or more. The shortest distance is preferably 4 mm or more and is more preferably 8 mm or less.

[Electrode holding step]

The electrode holding step is the step of holding the welding electrodes at a certain welding pressure after completion of the energization to prevent the occurrence of blowholes.

In the electrode holding step, the welding pressure holding time after completion of the energization is denoted as Th (S). Then, from the viewpoint of controlling the temperature after the electrodes are released, the welding pressure holding time (Th) satisfies the relation of formula (8) below. In this case, the effects of the invention can be obtained effectively.

$$\{(t + Si + TS / 1000) - 1.4\} / 132 < Th < [-\{(t + Si + TS / 1000) - 1.4\} / 66] + 1.1 \ (8) \tag{8}$$

In formula (8), t is the thickness of the steel sheet having the internally oxidized layer, and TS is the tensile strength of the steel sheet having the internally oxidized layer. Si is the average Si content in the steel sheet having the internally oxidized layer.

From the viewpoint of controlling the temperature more appropriately, it is more preferable to satisfy the following formula (9) in addition to the above conditional expression (formula (8)).

$$0 < Th \tag{9}$$

If the welding pressure holding time (Th) is excessively short, the temperature after the electrodes are released increases, and LME cracking tends to occur. If the welding pressure holding time (Th) is excessively long, the takt time per welding point is long, and the productivity decreases. Moreover, since the cooling rate of the weld increases, the microstructure of the weld is embrittled. In this case, the joint strength decreases, and the weld tends to undergo delayed fracture. In particular, as the thickness of the steel sheet, the content of Si, and the tensile strength increase, the sensitivity to LME and delayed fracture increases. In this case, the range in which the upper and lower limits of the welding pressure holding time (Th) are satisfied is narrow.

For the reasons described above, the welding pressure holding time is the time satisfying formula (8). The upper limit of formula (8) is preferably shorter than or equal to [-{(t + Si + TS /1000) - 1.4 / 66] + 0.9. The lower limit of formula (8) is longer than or equal to {(t + Si + TS / 1000) - 1.4} / 110.

For the reasons described above, it is more preferable that formula (9) is further satisfied. The lower limit of formula (9) is preferably 0.02 or more and more preferably 0.1 or more. The upper limit of formula (9) is preferably 1.0 or less and more preferably 0.8 or less.

EXAMPLES

The operations and effects of the present invention will be described by way of Examples. However, the present invention is not limited to the following Examples.

Sheet sets shown in Table 1 were used to produce welded joints (welded members) under welding conditions shown in Tables 2 and 3. In each sheet set, a steel sheet 1, a steel sheet 2, and a steel sheet 3 shown in Table 1 were sequentially disposed from the upper side so as to overlap each other. Each symbol shown in the "State immediately before pressurization" column corresponds to one of (a) to (e) shown in the welding work disturbances described above. The welder used was a servo motor pressing-type single-phase AC (50 Hz) resistance welder attached to a welding gun. The pair of electrode tips used were chromium-copper DR-type electrodes having a tip curvature radius R of 40 mm and a tip diameter of 6 mm.

In the "Tensile strength" columns in Table 1, the tensile strength (MPa) measured as follows is shown. A JIS No. 5 test piece for a tensile test was cut from one of the steel sheets in the rolling direction, and the tensile test was performed according to JIS Z 2241 to measure the tensile strength.

The TSS of each welded joint and the presence or absence of LME cracking were evaluated by methods described below. Methods described below were used to measure the thicknesses ($t_{all}$ and $t_{weld}$) in each welded joint, the amount (Os) of oxygen per unit area in the decarburized layer, the density (Ns) of the oxide containing Si, and the average Si concentrations (Ss and St).

[Measurement of thicknesses]

One of the produced welded joints was cut using a micro-cutter along a plane passing through the center of the weld, and a cross section in the thickness direction was observed. The total thickness ($t_{all}$) of the sheet set was determined by measuring the thicknesses of the steel sheets before welding and summing the thicknesses to compute the total thickness. The minimum thickness ($t_{weld}$) of the weld was determined by measuring the lengths in the thickness direction in a region extending in the width direction within the nugget at 100 μm intervals and determining the minimum value used as the "minimum thickness" (see Fig. 2). The obtained values were used to determine the value of "$t_{weld}/t_{all}$."

[Amount of oxygen per unit area in internally oxidized layer]

In each sheet set shown in Table 1, at least one steel sheet includes an internally oxidized layer in its steel sheet surface layer. In the Examples, the amount of oxygen (Os) (g/m$^2$) per unit area on one side of the steel sheet (i.e., the internally oxidized layer on the steel sheet faying surface side) was measured by the following method.

Steel of the same type as each steel sheet used for welding was prepared. When the steel sheet was a steel sheet having no zinc coating, the steel sheet was subjected to pickling treatment in 5 mass% HCl in order to remove external oxides in the steel sheet surface layer. When the steel sheet was a steel sheet having a zinc coating, the steel sheet was subjected to treatment for dissolving the galvanized layer in a 20 mass% aqueous NaOH solution containing triethanolamine. Then Os used as the amount of oxygen per unit area on one side of the steel sheet was measured by a fusion infrared absorption method. The Os of each steel sheet shown in the "Evaluation steel sheet" column in Table 2 was used as a representative value and shown in Table 2.

[Oxide density (Ns) and average Si concentrations (Ss and St)]

An electron probe microanalyzer (EPMA) was used to measure Ns, Ss, and St of each joint. Specifically, as for the Ns, a position on the steel sheet faying surface in an edge portion of a corona bond was defined as a starting point (point A in Fig. 2), and the number of Si-containing oxide particles in the first region defined by a range extending $\pm 50$ $\mu$m from the starting point as the center in directions parallel to the steel sheet faying surface and a range extending 10 $\mu$m from the starting point in the thickness direction was measured in Si and O mapping images by EPMA. The number of particles obtained was divided by the area ($100 \times 10 = 1000$ ($\mu$m$^2$)) to determine Ns. Regions in which the Si and O concentrations were higher than those in the surrounding regions were defined as Si-containing oxide particles.

As for Ss, in the second region defined by the range extending $\pm 50$ $\mu$m from the starting point as the center in the directions parallel to the steel sheet faying surface and a range extending 5 $\mu$m from the starting point in the thickness direction, the Si concentration was measured at five arbitrarily selected points containing no Si oxide by EPMA point analysis. The average of the measurements was used as Ss.

As for St, in the third region having a 100 $\mu$m $\times$ 100 $\mu$m square shape with the center located at a position spaced 1/4 the thickness from the starting point in the thickness direction, the Si concentration was measured at five arbitrarily selected points containing no Si oxide by EPMA point analysis. The average of the measurements was used as St.

The values obtained were used to determine the value of "Ss/St" in the welded joint. The value of "Ss/St" of each steel sheet shown in the "Evaluation steel sheet" column in Table 2 was used as a representative value and shown in Table **2.**

[Evaluation of TSS]

The tensile shear strength (TSS) was evaluated based on a tensile shear test method (JIS Z 3136). In the shear tensile test, shear tensile test pieces were cut from the steel sheets shown in Table 1, and sheet sets shown in Table 1 were resistance-spot-welded under welding conditions shown in Table 3 to produce welded joints (test specimens) used for the test.

To make comparisons with the obtained test specimens (the welded joints produced by the welding method of the invention), comparative joints in which the properties of the surface in the weld were not controlled (i.e., welded joints in which the Si concentration ratio was Ss/St $\approx$ 1.0) were also produced. The TSS of each comparative joint was also evaluated using the same tensile shear test method.

Each test specimen for the TSS evaluation had a shape specified in JIS Z 3136. In sheet sets including three overlapping sheets (such as sheet set No. H in Table 1), the evaluation was performed such that a tensile load was applied to the steel sheet 2 and the steel sheet 3 as shown in Fig. 7.

To produce the welded joints for TSS evaluation, only one welding point was used, and welding work disturbances such as the inclination angle and the sheet gap shown in Tables 2 and 3 were not provided.

The TSS was evaluated according to the following criteria.

<Evaluation criteria>

A: (the TSS of the welded joint produced by the welding method of the invention / the TSS of the comparative joint) $\geq 0.9$
B: $0.9 >$ (the TSS of the welded joint produced by the welding method of the invention / the TSS of the comparative joint) $\geq 0.8$
F: $0.8 >$ (the TSS of the welded joint produced by the welding method of the invention / the TSS of the comparative joint)

When the rating was A or B, the test specimen was rated pass (had good shear tensile strength).

[Evaluation of LME cracking]

Welding was performed in a state with one or two or more of the welding work disturbances (a) to (e) described above. The obtained welded joint was cut using a micro-cutter along a plane passing through the center of the weld, and then a cross section of the weld in the thickness direction was observed. From the results of the observation, the presence or absence of LME cracking was evaluated according to criteria shown below. Specifically, 10 welded joints were produced under welding conditions shown in Table 3, and a cross-section of the steel sheets was observed on the steel sheet faying surface side to check LME cracking. The weld in each steel sheet shown in the "Evaluation steel sheet" column in Table 2 was used for the cross-sectional observation on the steel sheet faying surface side and evaluated.

<Evaluation criteria>

    A: No cracking was found in all the ten welded joints.
    B: The number of cracked welded joints was 2 or less, and the maximum cracking depth was less than 100 $\mu$m.
    F: The number of cracked welded joints was 3 or more, or the maximum cracking depth was 100 $\mu$m or more.

When the rating was A or B, the welded joints were rated pass.
The values obtained and the evaluation results are shown in Tables 2 and 3.

[Table 1]

| Sheet set No. | Steel sheet 1 | | | | | | Steel sheet 2 | | | | | | Steel sheet 3 | | | | | |
|---|---|---|---|---|---|---|---|---|---|---|---|---|---|---|---|---|---|---|
| | Sheet thickness (mm) | Tensile strength (MPa) | Decarburized layer in surface layer | Si internally oxidized layer | Type of zinc coating | Fe-based precoating | Sheet hickness (mm) | Tensile strength (MPa) | Decarburized layer in surface layer | Si internally oxidized layer | Type of zinc coating | Fe-based precoating | Steel thickness (mm) | Tensile strength (MPa) | Decarburized layer in surface layer | Si internally oxidized layer | Type of zinc coating | Fe-based precoating |
| A | 1.6 | 980 | None | **None** | GA | None | 1.6 | 980 | Yes | Yes | GA | None | | | | | | |
| B | 1.2 | 1180 | Yes | Yes | GA | Yes | 1.2 | 1180 | Yes | Yes | GA | Yes | | | | | | |
| C | 20 | 1470 | Yes | Yes | GA | None | 2.0 | 1470 | Yes | Yes | GA | None | | | | | | |
| D | 1.6 | 980 | Yes | Yes | GA | None | 1.6 | 980 | Yes | Yes | GA | None | | | | | | |
| E | 1.6 | 980 | Yes | Yes | GA | None | 1.6 | 980 | Yes | Yes | GA | None | | | | | | |
| F | 1.6 | 1470 | Yes | Yes | GI | Yes | 1.6 | 1180 | None | **None** | GI | None | | | | | | |
| G | 1.0 | 1470 | Yes | Yes | EG | None | 1.0 | 1470 | Yes | Yes | EG | None | | | | | | |
| H | 0.7 | 270 | Yes | Yes | GA | None | 1.4 | 980 | Yes | Yes | GA | None | 1.6 | 1180 | Yes | Yes | GA | None |
| I | 1.6 | 980 | Yes | Yes | GA | None | 1.0 | 1180 | Yes | Yes | GA | None | | | | | | |
| J | 1.6 | 1180 | None | **None** | GA | None | 1.6 | 1180 | None | **None** | GA | None | | | | | | |
| K | 1.4 | 1180 | Yes | Yes | - | None | 1.6 | 1470 | Yes | Yes | - | None | | | | | | |
| L | 1.2 | 980 | Yes | Yes | GA | None | 1.6 | 1470 | Yes | Yes | GA | None | | | | | | |
| M | 1.2 | 980 | None | Yes | - | None | 1.4 | 980 | None | Yes | - | None | | | | | | |
| N | 0.6 | 270 | None | **None** | GA | None | 2.0 | 1180 | Yes | Yes | - | None | 2.0 | 1470 | Yes | Yes | GA | None |
| O | 1.8 | 980 | None | **None** | GA | None | 2.0 | 980 | None | **None** | - | None | 2.0 | 1180 | Yes | Yes | GA | Yes |
| P | 1.8 | 980 | None | **None** | - | None | 1.6 | 980 | Yes | Yes | GA | None | 1.6 | 1850 | Yes | Yes | GA | Yes |

*GA Hot-dip galvannealing *GI Hot-dip galvanizing *EG Electrogalvanizing

[Table 2]

| Condi-tion No. | She-et set No. | $t_{weld}/t_{all}$ | Evalua-tion steel sheet | Properties of weld | | | | | | | | | | | | Aver-age shortest dis-tance $H_1$ (mm) | Average of center-to-center distan-ces between welding points $H_2$ (mm) | Num-ber of welding points | Remarks |
|---|---|---|---|---|---|---|---|---|---|---|---|---|---|---|---|---|---|---|---|
| | | | | Sheet thick-ness t (mm) | Tensile strengt-h TS (MPa) | Degree of internal oxida-tion Os $(g/m^2)$ | Aver-age Si content in steel sheet Si (% by mass) | Density of oxide containing Si Ns (parti-cles/$\mu m^2$) | Average Si concentra-tion ratio Ss/St | t+Si +TS/1000 | Lower limit of formu-la (5) | Suitabil-ity of formula (5) | Lower limit of formula (7) | Upper limit of formu-la (7) | Suitabil-ity of formula (7) | | | | |
| 1 | A | 0.90 | Steel sheet 2 | 1.6 | 980 | 0.2 | 1.0 | 0.10 | 0.70 | 3.58 | 0.04 | ○ | 0.03 | 0.93 | ○ | 15.0 | - | 1 | Inventive Example |
| 2 | B | 0.80 | Steel sheet 1 | 1.2 | 1180 | 0.4 | 2.0 | 0.20 | 0.10 | 4.38 | 0.06 | ○ | 0.05 | 0.95 | ○ | 15.0 | 20.0 | 3 | Inventive Example |
| 3 | C | 0.95 | Steel sheet 1 | 2.0 | 1470 | 0.8 | 1.7 | 1.00 | 0.30 | 5.17 | 0.07 | ○ | 0.06 | 0.96 | ○ | 15.0 | 10.0 | 3 | Inventive Example |
| 4 | D | 0.70 | Steel sheet 2 | 1.6 | 980 | **0.01** | 1.5 | **0.002** | **1.00** | 4.08 | 0.05 | × | 0.04 | 0.94 | × | 15.0 | - | 1 | Compara-tive Exam-ple |
| 5 | E | 0.80 | Steel sheet 1 | 1.6 | 980 | 0.03 | 1.2 | 0.04 | 0.95 | 3.78 | 0.05 | × | 0.04 | 0.94 | × | 15.0 | 5.0 | 2 | Inventive Example |
| 6 | F | 0.55 | Steel sheet 1 | 1.6 | 1470 | 0.7 | 0.8 | 1.00 | 0.02 | 3.87 | 0.05 | ○ | 0.04 | 0.94 | × | 2.7 | - | 1 | Inventive Example |
| 7 | G | 0.80 | Steel sheet 2 | 1.0 | 1470 | 0.08 | 0.7 | 0.07 | 0.90 | 3.17 | 0.04 | ○ | 0.03 | 0.93 | ○ | 8.0 | - | 1 | Inventive Example |
| 8 | H | 0.85 | Steel sheet 3 | 1.6 | 1180 | 0.08 | 1.2 | 0.80 | 0.20 | 3.98 | 0.05 | ○ | 0.04 | 0.94 | ○ | 12.0 | - | 1 | Inventive Example |
| 9 | I | **0.40** | Steel sheet 2 | 1.0 | 1180 | **1.1** | 2.0 | 30.00 | 0.03 | 4.18 | 0.05 | ○ | 0.04 | 0.94 | × | 15.0 | - | 1 | Compara-tive Exam-ple |
| 10 | J | 0.80 | Steel sheet 2 | 1.6 | 1180 | - | 1.5 | - | - | 4.28 | 0.05 | - | 0.04 | 0.94 | - | 15.0 | - | 1 | Compara-tive Exam-ple |
| 11 | K | 0.85 | Steel sheet 2 | 1.6 | 1470 | 0.8 | 1.4 | 10.00 | 0.10 | 4.47 | 0.06 | ○ | 0.05 | 0.95 | ○ | 15.0 | - | 1 | Inventive Example |

19

(continued)

| Condition No. | Sheet set No. | $t_{weld}/-t_{all}$ | Evaluation steel sheet | Properties of weld | | | | | | | | | | | | Average shortest distance $H_1$ (mm) | Average of center-to-center distances between welding points $H_2$ (mm) | Number of welding points | Remarks |
|---|---|---|---|---|---|---|---|---|---|---|---|---|---|---|---|---|---|---|---|
| | | | | Sheet thickness t (mm) | Tensile strength TS (MPa) | Degree of internal oxidation Os (g/m²) | Average Si content in steel sheet Si (% by mass) | Density of oxide containing Si Ns (particles/μm²) | Average Si concentration ratio Ss/St | t+Si +TS/1000 | Lower limit of formula (5) | Suitability of formula (5) | Lower limit of formula (7) | Upper limit of formula (7) | Suitability of formula (7) | | | | |
| 12 | L | 0.90 | Steel sheet 2 | 1.6 | 1470 | 0.4 | 1.5 | 15.00 | 0.08 | 4.57 | 0.06 | ○ | 0.05 | 0.95 | ○ | 15.0 | - | 1 | Inventive Example |
| 13 | M | 0.80 | Steel sheet 2 | 1.4 | 980 | 0.3 | 1.0 | 0.30 | 0.20 | 3.38 | 0.04 | ○ | 0.03 | 0.93 | ○ | 15.0 | - | 1 | Inventive Example |
| 14 | N | 0.80 | Steel sheet 3 | 2.0 | 1470 | 0.1 | 1.3 | 2.00 | 0.10 | 4.77 | 0.06 | ○ | 0.05 | 0.95 | ○ | 15.0 | - | 1 | Inventive Example |
| 15 | O | 0.70 | Steel sheet 3 | 2.0 | 1180 | 0.08 | 1.0 | 1.50 | 0.15 | 4.18 | 0.05 | ○ | 0.04 | 0.94 | ○ | 15.0 | - | 1 | Inventive Example |
| 16 | P | 1.60 | Steel sheet 3 | 1.6 | 1850 | 0.2 | 1.2 | 4.00 | 0.20 | 4.65 | 0.06 | ○ | 0.05 | 0.95 | ○ | 15.0 | - | 1 | Inventive Example |
| 17 | A | 0.90 | Steel sheet 2 | 1.6 | 980 | 0.2 | 1.0 | 0.08 | 0.80 | 3.58 | 0.04 | ○ | 0.03 | 0.93 | ○ | 30.0 | 60.0 | 2 | Inventive Example |
| 18 | A | 0.90 | Steel sheet 2 | 1.6 | 980 | 0.2 | 1.0 | 0.05 | 0.75 | 3.58 | 0.04 | ○ | 0.03 | 0.93 | ○ | 15.0 | - | 1 | Inventive Example |

'1. {(t + Si + TS / 1000) - 1.4} / 66 +0.01 ≤ Ns (5) *2. {(t + Si + TS / 1000) - 1.4} / 66 < Ss / St < {(t+Si +TS / 1000) - 1.4}/66 +0.9 (7)

[Table 3]

| Condition No. | Sheet set No. | Welding step | | | | | | | | | Results | | Remarks |
| | | Energization step | | | | | Electrode holding step | | | | | | |
| | | State immediately before pressurization | | Welding pressure (kN) | Welding current (kA) | Energization time (S) | Electrode holding time Th (S) | Lower limit of formula (8) | Upper limit of formula (8) | Suitability of formula (8) | TSS | LME | |
|---|---|---|---|---|---|---|---|---|---|---|---|---|---|
| 1 | A | (a) (c) | Inclination angle: 5 degrees Gap between electrode and sheet: 2 mm | 4.0 | 5.8 | 0.40 | 0.250 | 0.017 | 1.067 | ○ | A | A | Inventive Example |
| 2 | B | (a) | Inclination angle: 5 degrees | 3.5 | 7.0 | 0.25 | 0.100 | 0.023 | 1.055 | ○ | A | A | Inventive Example |
| 3 | C | (b) | Offset amount: :1 mm | 5.0 | 7.2 | 0.34 | 0.300 | 0.029 | 1.043 | ○ | A | A | Inventive Example |
| 4 | D | (a) (c) | Inclination angle: 5 degrees Gap between electrode and sheet: 2 mm | 4.5 | 6.0 | 0.30 | **0.018** | 0.020 | 1.059 | × | A | F | Comparative Example |
| 5 | E | (a) (c) | Inclination angle: 5 degrees Gap between electrode and sheet: 2 mm | 4.5 | 6.0 | 1.00 | 0.020 | 0.018 | 1.064 | ○ | A | B | Inventive Example |

(continued)

| Condition No. | Sheet set No. | Welding step | | | | | | | | | | Results | | Remarks |
| | | Energization step | | | | | Electrode holding step | | | | | | | |
| | | State immediately before pressurization | | Welding pressure (kN) | Welding current (kA) | Energization time (S) | Electrode holding time Th (S) | Lower limit of formula (8) | Upper limit of formula (8) | Suitability of formula (8) | | TSS | LME | |
| 6 | F | (e) | Shortest distance to end face of steel sheets: 2.7 mm | 4.5 | 6.0 | 0.10 | 0.030 | 0.019 | 1.063 | ○ | | B | B | Inventive Example |
| 7 | G | (c) (e) | Gap between electrode and sheet: 2 mm Shortest distance to end face of steel sheets: 8.0 mm | 5.5 | 8.0 | 0.32 | 0.200 | 0.013 | 1.073 | ○ | | A | A | Inventive Example |
| 8 | H | (d) | Gap between sheets: 2 mm | 4.5 | 7.2 | 0.42 | 0.180 | 0.020 | 1.061 | ○ | | A | A | Inventive Example |
| 9 | I | (a) (c) | Inclination angle: 7 degrees Gap between electrode and sheet: 2 mm | 5.0 | **16.0** | 0.60 | 0.200 | 0.021 | 1.058 | ○ | | F | F | Comparative Example |

(continued)

| Condition No. | Sheet set No. | Welding step | | | | | | Electrode holding step | | | | Results | | Remarks |
| | | Energization step | | | | | | | | | | | | |
| | | State immediately before pressurization | | Welding pressure (kN) | Welding current (kA) | Energization time (S) | Electrode holding time Th (S) | Lower limit of formula (8) | Upper limit of formula (8) | Suitability of formula (8) | TSS | LME | |
|---|---|---|---|---|---|---|---|---|---|---|---|---|---|---|
| 10 | J | (a) (c) | Inclination angle: 5 degrees Gap between electrode and sheet: 2 mm | 3.5 | 6.0 | 0.25 | **0.020** | 0.022 | 1.056 | × | - | F | Comparative Example |
| 11 | K | (c) | Gap between electrode and sheet: 2 mm | 4.0 | 7.0 | 0.16 | 0.200 | 0.023 | 1.053 | ○ | A | A | Inventive Example |
| 12 | L | (a) | Inclination angle: 5 degrees | 4.0 | 7.0 | 0.12 | 0.200 | 0.024 | 1.052 | ○ | A | A | Inventive Example |
| 13 | L | (a) | Inclination angle: 3 degrees | 4.5 | 8.0 | 0.14 | 0.900 | 0.015 | 1.070 | ○ | A | A | Inventive Example |
| 14 | N | (c) | Gap between electrode and sheet: 2 mm | 4.5 | 8.0 | 0.50 | 0.300 | 0.026 | 1.049 | ○ | A | A | Inventive Example |
| 15 | O | (a) | Inclination angle: 5 degrees | 5.0 | 8.0 | 0.45 | 0.400 | 0.021 | 1.058 | ○ | A | A | Inventive Example |
| 16 | P | (c) | Gap between electrode and sheet: 2 mm | 4.0 | 7.0 | 0.45 | 0.200 | 0.025 | 1.051 | ○ | A | A | Inventive Example |

(continued)

| Condition No. | Sheet set No. | Welding step | | | | | | | | | Results | | Remarks |
| | | Energization step | | | | | Electrode holding step | | | | | | |
| | | State immediately before pressurization | | Welding pressure (kN) | Welding current (kA) | Energization time (S) | Electrode holding time Th (S) | Lower limit of formula (8) | Upper limit of formula (8) | Suitability of formula (8) | TSS | LME | |
| 17 | A | (a) | Inclination angle: 7 degrees | 6.0 | 11.5 | 0.40 | 0.200 | 0.017 | 1.067 | ○ | A | A | Inventive Example |
| 18 | A | (a) | Inclination angle: 7 degrees | 5.0 | 6.0 | 1.40 | 0.100 | 0.017 | 1.067 | ○ | A | A | Inventive Example |
| *1. (t + Si + TS / 1000) - 1.4} / 132 < Th < [-{(t + Si + TS / 1000) - 1.4} / 66] +1.1 (8) | | | | | | | | | | | | | |

As is clear from Table 3, the evaluation results for the welded joints (welded members) in Inventive Examples were all A or B. According to the present invention, the strength of the weld can be ensured, and also the occurrence of LME cracking can be prevented.

Reference Signs List

1, 2, 3 steel sheet
4, 5 welding electrode
6 weld
6a nugget
6b weld heat affected zone
7 steel sheet faying surface
8 welding point
9a first region
9b second region
9c third region
10 welded member

**Claims**

1. A welded member having a resistance spot weld formed by resistance-spot-welding a sheet set including two or more overlapping steel sheets,

    wherein a total thickness of the sheet set is denoted as $t_{all}$ (mm), wherein a minimum thickness of the resistance spot weld is denoted as $t_{weld}$ (mm), wherein $t_{all}$ (mm) and $t_{weld}$ (mm) satisfy formula (1),
    wherein at least one of the two or more steel sheets is a steel sheet having an internally oxidized layer in a steel sheet surface layer,
    wherein, in a base metal zone in the steel sheet having the internally oxidized layer, an amount of oxygen per unit area in the internally oxidized layer on a steel sheet faying surface side is denoted as Os ($g/m^2$), and Os satisfies formula (2),
    wherein, in a weld heat affected zone in the steel sheet having the internally oxidized layer, a position on a steel sheet faying surface in an edge portion of a corona bond is defined as a starting point, and a density of oxide containing Si in a first region defined by a range extending $\pm 50$ $\mu$m from the starting point as a center in directions parallel to the steel sheet faying surface and a range extending 10 $\mu$m from the starting point in a thickness direction is denoted as Ns (particles/$\mu m^2$), wherein Ns satisfies formula (3),
    wherein, in the weld heat affected zone in the steel sheet having the internally oxidized layer, an average concentration of Si in a second region defined by the range extending $\pm 50$ $\mu$m from the starting point as the center in the directions parallel to the steel sheet faying surface and a range extending 5 $\mu$m from the starting point in the thickness direction is denoted as Ss (% by mass), and an average concentration of Si in a third region having a 100 $\mu$m $\times$ 100 $\mu$m square shape with a center located at a position spaced 1/4 a thickness from the starting point in the thickness direction is denoted as St (% by mass), and wherein Ss and St satisfy formula (4):

$$0.5 < t_{weld} \, / \, t_{all} < 1.0, \qquad (1)$$

$$0.02 < Os < 1.0, \qquad (2)$$

$$0.01 \leq Ns, \qquad (3)$$

$$Ss \, / \, St < 1.0. \qquad (4)$$

2. The welded member according to claim 1, wherein a thickness of the steel sheet is denoted as t (mm), wherein a tensile strength of the steel sheet is denoted as TS (MPa), wherein an average content of Si in the steel sheet is denoted as Si (% by mass),

wherein the steel sheet having the internally oxidized layer satisfies formula (5):

$$\{(t + Si + TS / 1000) - 1.4\} / 66 + 0.01 \leq Ns, \qquad (5)$$

where, in formula (5), Ns (particles/$\mu m^2$) is the density of the oxide containing Si in the first region.

3. The welded member according to claim 1 or 2, wherein, in the steel sheet having the internally oxidized layer, Ss and St satisfy formula (7):

$\{(t + Si + TS / 1000) - 1.4\} / 66 < Ss / St < \{(t + Si + TS / 1000) - 1.4\} / 66 + 0.9,$ (7) (7)

where, in formula (7), t (mm) is a thickness of the steel sheet having the internally oxidized layer, TS (MPa) is a tensile strength of the steel sheet having the internally oxidized layer, and Si (% by mass) is an average content of Si in the steel sheet having the internally oxidized layer.

4. The welded member according to any one of claims 1 to 3, wherein the steel sheet having the internally oxidized layer includes a decarburized layer and/or a galvanized layer.

5. The welded member according to claim 4, an Fe-based precoated layer is disposed below the galvanized layer.

6. The welded member according to any one of claims 1 to 5, wherein an average of a shortest distance from a center of a welding point of the resistance spot weld to an end face of the steel sheets is 3 mm or more, and
wherein, when the welded member has a plurality of the welding points, an average of center-to-center distances between adjacent ones of the welding points is 6 mm or more.

7. A method for producing the welded member according to any one of claims 1 to 6, the method comprising:

a preparation step of disposing the two or more steel sheets so as to overlap each other to form the sheet set; and a welding step of resistance-spot-welding the sheet set,
wherein, in the welding step,
the sheet set is held between a pair of welding electrodes to perform energization for joining under application of pressure, and
one or two or more of states (a) to (e) are satisfied at at least one welding point immediately before the application of the pressure by the welding electrodes,
wherein the welding step includes
an energization step of performing the energization at a welding pressure of 2.0 to 10.0 kN and a welding current of 4.0 to 15.0 kA for an energization time of 0.1 to 2.0 S and
an electrode holding step in which, when a welding pressure holding time after completion of the energization is denoted as Th (S), Th satisfies the relation of formula (8):

(a) a state in which an inclination angle between the welding electrodes and the overlapping steel sheets is 0.2 degrees or more;
(b) a state in which an amount of offset between the pair of welding electrodes is 0.1 mm or more;
(c) a state in which a gap of 0.5 mm or more is present between one of the welding electrodes and the overlapping steel sheets;
(d) a state in which a gap of 0.5 mm or more is present between at least one pair of steel sheets among the overlapping steel sheets; and
(e) a state in which a shortest distance from a center of the at least one welding point to a steel sheet end face of the overlapping steel sheets is 10 mm or less:

$\{(t + Si + TS / 1000) - 1.4\} / 132 < Th < [-\{(t + Si + TS / 1000) - 1.4\} / 66] + 1.1,$ (8) (8)

where, in formula (8), t (mm) is a thickness of the steel sheet having the internally oxidized layer, TS (MPa) is a tensile strength of the steel sheet having the internally oxidized layer, and Si (% by mass) is an average content of Si in the steel sheet having the internally oxidized layer.

# FIG. 1

# FIG. 2

# FIG. 3

(A)

(B)

(C)

# FIG. 4

## FIG. 5

## FIG. 6

## FIG. 7

# FIG. 8

EP 4 563 274 A1

## INTERNATIONAL SEARCH REPORT

International application No.

**PCT/JP2023/033592**

### A. CLASSIFICATION OF SUBJECT MATTER

***B23K 11/16***(2006.01)i; ***B23K 11/11***(2006.01)i; ***C22C 38/00***(2006.01)i
FI:  B23K11/16 101; B23K11/16 311; B23K11/11 540; C22C38/00 302X

According to International Patent Classification (IPC) or to both national classification and IPC

### B. FIELDS SEARCHED

Minimum documentation searched (classification system followed by classification symbols)

B23K11/16; B23K11/11; C22C38/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2012-102370 A (NIPPON STEEL CORP.) 31 May 2012 (2012-05-31)<br>entire text, all drawings | 1-7 |
| A | WO 2022/097736 A1 (JFE STEEL CORP.) 12 May 2022 (2022-05-12)<br>entire text, all drawings | 1-7 |
| A | WO 2022/097734 A1 (JFE STEEL CORP.) 12 May 2022 (2022-05-12)<br>entire text, all drawings | 1-7 |
| P, A | WO 2023/054717 A1 (NIPPON STEEL CORP.) 06 April 2023 (2023-04-06)<br>entire text, all drawings | 1-7 |
| P, A | WO 2022/230071 A1 (NIPPON STEEL CORP.) 03 November 2022 (2022-11-03)<br>entire text, all drawings | 1-7 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 October 2023** | **31 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/033592**

| Patent document cited in search report | | | Publication date (day/month/year) | Patent family member(s) | Publication date (day/month/year) |
|---|---|---|---|---|---|
| JP | 2012-102370 | A | 31 May 2012 | (Family: none) | |
| WO | 2022/097736 | A1 | 12 May 2022 | KR 10-2023-0085193 A<br>entire text, all drawings | |
| WO | 2022/097734 | A1 | 12 May 2022 | KR 10-2023-0085192 A<br>entire text, all drawings | |
| WO | 2023/054717 | A1 | 06 April 2023 | (Family: none) | |
| WO | 2022/230071 | A1 | 03 November 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10195597 A
- JP 2003103377 A

- JP 2003236676 A